# EUROPÄISCHE PATENTSCHRIFT

(11) **EP 4 598 776 B1**
(45) Veröffentlichungstag und Bekanntmachung des Hinweises auf die Patenterteilung: **26.08.2026**
(21) Anmeldenummer: 23775967.5
(22) Anmeldetag: 13.09.2023
(51) Int. Cl.: B60P 3/075, F16B 29/00, B60S 11/00, F16B 35/00

(54) **VORRICHTUNG ZUM VERZURREN EINES FAHRZEUGS AUF EINER LADEFLÄCHE UND FAHRZEUG MIT MINDESTENS EINER SOLCHEN VORRICHTUNG**
APPARATUS FOR TIE-DOWN A VEHICLE ON A LOAD SURFACE AND VEHICLE WITH AT LEAST ONE SUCH APPARATUS
DISPOSITIF POUR RATTACHER UN VÉHICULE À UNE SURFACE DE CHARGEMENT ET VÉHICULE COMPORTANT AU MOINS UN TEL DISPOSITIF

(30) Priorität: 05.10.2022 DE 102022003683
(43) Veröffentlichungstag der Anmeldung: 13.08.2025
(73) Patentinhaber: Mercedes-Benz Group AG, 70372 Stuttgart (DE)
(72) Erfinder: HUMMEL, Frank, 72800 Eningen (DE); DEUTSCH, Alexander, 70439 Stuttgart (DE); GEIER, René, David, 71576 Burgstetten (DE); THORSTEN, Paul, 74211 Leingarten (DE)
(74) Vertreter: Novagraaf Group
(86) Internationale Anmeldenummer: PCT/EP2023/075095
(87) Internationale Veröffentlichungsnummer: WO 2024/074273

(56) Entgegenhaltungen:
- EP-A1- 2 127 971
- DE-A1- 102022 002 497
- GB-A- 2 414 009

## Beschreibung

Die Erfindung betrifft eine Vorrichtung zum Verzurren eines Fahrzeugs auf einer Ladefläche und ein Fahrzeug.

Aus dem Stand der Technik ist, wie in der DE 20 2016 106 737 U1 beschrieben, eine Vorrichtung zum Verzurren von Fahrzeugen auf einer Ladefläche bekannt. Die Vorrichtung umfasst zumindest einen über ein Fahrzeugrad geführten Zurrgurt, welcher mit wenigstens einem an der Ladefläche angeordneten Haltemittel ausgerüstet ist, und ein auf dem Zurrgurt arbeitendes Spannelement. Zusätzlich ist wenigstens ein Federelement vorgesehen, dessen Verformung als Maßstab für mit Hilfe des Spannelementes aufgebaute Zurrkräfte fungiert.

In der DE 10 2013 222 044 A1 wird eine Felgenabdeckung beschrieben. Die Felgenabdeckung für ein Fahrzeugrad zur Anbringung an einer Fahrzeugfelge hat wenigstens ein Flügelelement zum Abdecken zumindest eines Abschnitts der Felge, das temperaturabhängig wenigstens eine erste Form und eine zweite Form einnehmen kann. Zumindest ein Teil des Flügelelements ist so ausgebildet, dass es sich bei Wärmezufuhr axial weg von der Felge verformt.

In der DE 10 2022 002 497 A1 wird ein Felgenadaptersystem offenbart, das zum Anbringen eines Anschlagelements an einer Felge und zum Anheben eines mit der Felge verbundenen Fahrzeugs dient.

Die DE 20 2004 003 314 U1 offenbart eine Einrichtung zum Heben von Rad-Fahrzeugen, wobei an der Felge eines Rades ein Rohrabschnitt befestigbar ist, an dessen einem Ende ein Anschlusselement mit einem Durchbruch zur Aufnahme eines Hubseils und an dessen anderem Ende mindestens ein Koppelelement mit mindestens einer Bohrung zur Befestigung des Rohrabschnitts an einem freien Ende einer Achse des Fahrzeuges angeordnet ist.

Die EP 2 127 971 A1 offenbart eine Felge, die mit einem Anschlagelement ausgestattet ist, über welches ein von der Felge getragenes Fahrzeug angehoben werden kann.

Die US 3 061 354 A offenbart eine Fahrzeughandhabungsvorrichtung zur Befestigung an Radbefestigungsbolzen, die von einer Radnabe eines Fahrzeugs getragen wird, umfassend Rohrelemente, zum Anheben oder Verzurren des Fahrzeugs.

Die Internetseite https://www.quora.com/How-do-F1-teams-transport-their-equipment-overseas wird offenbart, die Zentralbohrung eines Rades zum Verzurren herzunehmen.

Der Erfindung liegt die Aufgabe zu Grunde, eine gegenüber dem Stand der Technik verbesserte Vorrichtung zum Verzurren eines Fahrzeugs auf einer Ladefläche und ein Fahrzeug mit zumindest einer solchen Vorrichtung anzugeben.

Die Aufgabe wird erfindungsgemäß gelöst durch eine Vorrichtung zum Verzurren eines Fahrzeugs auf einer Ladefläche mit den Merkmalen des Anspruchs 1 und ein Fahrzeug mit den Merkmalen des Anspruchs 8.

Vorteilhafte Ausgestaltungen der Erfindung sind Gegenstand der Unteransprüche.

Eine Vorrichtung zum Verzurren eines Fahrzeugs auf einer Ladefläche weist erfindungsgemäß mindestens eine Verzurröse und eine Befestigungsanordnung zum formschlüssigen Befestigen der mindestens einen Verzurröse an einer Nabendeckelaufnahme eines Fahrzeugrades des Fahrzeugs auf. Das Fahrzeugrad oder zumindest dessen Felge kann beispielsweise ebenfalls ein Bestandteil der Vorrichtung sein.

Ein erfindungsgemäßes Fahrzeug weist mindestens eine solche Vorrichtung auf. Insbesondere weist das Fahrzeug mehrere solche Vorrichtungen auf, insbesondere für jedes Fahrzeugrad des Fahrzeugs eine solche Vorrichtung.

Die Vorrichtung ist insbesondere als eine Zentralverschlussklemme ausgebildet, d. h. die Befestigungsanordnung ist in einem am Fahrzeugrad montierten Zustand formschlüssig in einer zentralen Öffnung des Fahrzeugrades, insbesondere einer Felge des Fahrzeugrades, verklemmt. Die Nabendeckelaufnahme, welche zur Aufnahme eines Nabendeckels des Fahrzeugrades vorgesehen ist, ist ein Teilbereich dieser zentralen Öffnung, insbesondere ein in Axialrichtung dieser zentralen Öffnung äußerer Teilbereich, der somit einer Außenseite des Fahrzeugrades zugewandt ist. Die Nabendeckelaufnahme ist dabei eine zur Aufnahme des Nabendeckels ausgebildete Geometrie dieses Teilbereichs der zentralen Öffnung. An diesen Teilbereich schließt sich in Axialrichtung ein innerer Bereich an, der somit einer Innenseite des Fahrzeugrades zugewandt ist. Die Innenseite des Fahrzeugrades weist in Richtung einer Achse des Fahrzeugs, an der das Fahrzeugrad befestigt ist. Die Vorrichtung, insbesondere deren Befestigungsanordnung, ist eine stabile, insbesondere metallische, Spannmechanik, die in diese zentrale Öffnung eingesetzt und darin am Fahrzeugrad verspannt wird, so dass sie formschlüssig, insbesondere in Axialrichtung der zentralen Öffnung formschlüssig, am Fahrzeugrad befestigt ist.

Die erfindungsgemäße Vorrichtung oder genauer gesagt die mehreren erfindungsgemäßen Vorrichtungen, welche an jeweils einem Fahrzeugrad des Fahrzeugs angeordnet sind, ermöglicht/ermöglichen eine sichere Verzurrung des Fahrzeugs zu dessen Transport, beispielsweise in einem Schiff für einen Schiffstransport, ohne dabei das Fahrzeug, insbesondere dessen Fahrzeugräder, zu beschädigen. Dies erfolgt insbesondere mittels mindestens eines an der jeweiligen Verzurröse befestigten Spannbandes, nachdem die Vorrichtung am Fahrzeugrad befestigt ist. Zum Anordnen der Vorrichtung ist dabei nur das Entfernen des Nabendeckels erforderlich. An einem Zielort des Transports wird die Vorrichtung dann wieder vom Fahrzeugrad entfernt und der Nabendeckel in die Nabendeckelaufnahme eingesetzt.

Im Stand der Technik erfolgt dieses Verzurren, insbesondere im Schiffstransport, durch Spannbänder, die durch Speichen der Fahrzeugräder geschlauft werden. Dies ist jedoch insbesondere bei aerodynamisch optimierten Fahrzeugrädern problematisch, da diese keine Zwischenspeichenbereiche zum Durchziehen der Spannbänder aufweisen. Werden die Spannbänder dennoch an diesen Fahrzeugrädern befestigt, können die Fahrzeugräder, insbesondere deren Speichen und/oder Aerodynamikelemente, beschädigt werden. Dies wird durch die erfindungsgemäße Lösung vermieden.

Eine aus dem Stand der Technik bekannte Alternative ist die Montage anderer Fahrzeugräder für den Transport des Fahrzeugs, welche das Verzurren auf die aus dem Stand der Technik bekannte Weise ermöglichen. Diese müssen nach dem Transport wieder ausgetauscht werden. Durch die erfindungsgemäße Lösung wird auch dieser Aufwand des zweifachen Räderwechsels für den Transport vermieden.

Es ist insbesondere vorgesehen, dass die Befestigungsanordnung folgendes aufweist:
- einen Träger, der derart ausgebildet ist, dass er formschlüssig von einer Außenseite des Fahrzeugrades aus in die Nabendeckelaufnahme einsetzbar ist, und der eine zentrale Durchführungsöffnung zur Aufnahme einer Gewindestange aufweist,
- die Gewindestange,
- einen an der Gewindestange angeordneten Spannkonus,
- eine Halteplatte, an der die mindestens eine Verzurröse befestigt ist, beispielsweise mit der Halteplatte verschweißt ist, wobei die Halteplatte eine zentrale Schrauböffnung zum Einschrauben der Gewindestange aufweist, und
- mindestens zwei Verriegelungselemente.

Bei dieser Ausführungsform sind somit der Spannkonus mit der Gewindestange und die Verriegelungselemente in der zentralen Öffnung des Fahrzeugrades anordbar, der Spannkonus und die Verriegelungselemente insbesondere in dem sich an die Nabendeckelaufnahme in Axialrichtung anschließenden Bereich der zentralen Öffnung. Die Gewindestange ragt dabei durch die zentrale Öffnung nach außen hindurch, so dass der Träger darauf aufschiebbar und in die Nabendeckelaufnahme einsetzbar und anschließend die Halteplatte auf die Gewindestange aufschraubbar ist. Dadurch wird der Träger in der Nabendeckelaufnahme fixiert und schützt die Felge des Fahrzeugrades gegen Beschädigungen, da die sich während des Aufschraubens drehende Halteplatte nicht mit der Felge, sondern nur mit dem Träger in Berührung kommt. Durch das Aufschrauben der Halteplatte wird die Gewindestange nach außen, d. h. in Richtung der Außenseite des Fahrzeugrades, gezogen und zieht dabei auch den Spannkonus in diese Richtung. Die Verriegelungselemente sind zwischen dem Spannkonus und einer inneren Durchmesserverringerungsausformung der zentralen Öffnung des Fahrzeugrades in dieser zentralen Öffnung angeordnet und werden somit durch den Spannkonus in der zentralen Öffnung radial nach außen und zudem gegen diese Durchmesserverringerungsausformung gepresst, bis sie an dieser Durchmesserverringerungsausformung und an einer Öffnungsinnenwand der zentralen Öffnung anliegen. Ist dies der Fall, ist die Vorrichtung, insbesondere die Befestigungsanordnung, am Fahrzeugrad verspannt, d. h. formschlüssig in der zentralen Öffnung angeordnet und darin befestigt. Der Träger sitzt dabei in der Nabendeckelaufnahme und die Halteplatte mit der mindestens einen Verzurröse liegt am Träger an und ist über die Gewindestange und die Befestigungsanordnung am Fahrzeugrad befestigt.

Um die beschriebene Befestigung am Fahrzeugrad zu ermöglichen, ist insbesondere vorgesehen, dass die Verriegelungselemente jeweils folgendes aufweisen:
- eine Innenwand, die korrespondierend zu einer Kegelstumpfmantelfläche des Spannkonus ausgebildet ist, und
- eine Außenwand, die korrespondierend zur Öffnungsinnenwand des sich an die Nabendeckelaufnahme in Axialrichtung anschließenden Bereichs der zentralen Öffnung des Fahrzeugrades ausgebildet ist.

Es ist insbesondere vorgesehen, dass eine Summe eines größten Außendurchmessers des Spannkonus und der, insbesondere radialen, Breiten der beiden Verriegelungselemente größer ist als ein kleinster Innendurchmesser der zentralen Öffnung des Fahrzeugrades. Dieser kleinste Innendurchmesser liegt insbesondere an der Durchmesserverringerungsausformung der zentralen Öffnung vor.

In einer möglichen Ausführungsform weist die Gewindestange eine Auswerferausformung auf, deren Durchmesser größer ist als ein Durchmesser einer zentralen Aufnahmeöffnung im Spannkonus für die Gewindestange. Dadurch wird es ermöglicht, zum Entfernen der Vorrichtung nach dem Abschrauben der Halteplatte die Gewindestange zurückzuschieben, d. h. in Richtung der Achse des Fahrzeugs und somit in Richtung des Spannkonus, und diesen dadurch von den Verriegelungselementen zu lösen. Dies erleichtert das Lösen des Spannkonus und der durch diesen in der zentralen Öffnung des Fahrzeugrades verklemmten Verriegelungselemente.

In einer möglichen Ausführungsform sind zwei Verzurrösen vorgesehen, insbesondere an der Halteplatte befestigt. Insbesondere ist vorgesehen, dass die beiden Verzurrösen um 90° gegeneinander verdreht an der Halteplatte befestigt sind. Dadurch wird eine Ausrichtung des Spannbandes erleichtert. Insbesondere ist dadurch unabhängig von der jeweiligen Stellung der Halteplatte im festgeschraubten Zustand mindestens eine der beiden Verzurrösen in einer für das Spannband geeigneten Stellung ausgerichtet.

Es ist insbesondere vorgesehen, dass die Vorrichtung aus Metall ausgebildet ist, d. h. insbesondere sind alle Komponenten der Vorrichtung aus Metall ausgebildet. Dadurch wird ein sicheres Verspannen des Fahrzeugs mittels der Vorrichtung ermöglicht. Ausführungsbeispiele der Erfindung werden im Folgenden anhand von Zeichnungen näher erläutert.

Dabei zeigen:
- Fig. 1: schematisch eine Schnittdarstellung eines Fahrzeugrades eines Fahrzeugs mit einer Vorrichtung zum Verzurren des Fahrzeugs auf einer Ladefläche, und
- Fig. 2: schematisch eine Draufsicht von vorn auf die Vorrichtung.

Einander entsprechende Teile sind in allen Figuren mit den gleichen Bezugszeichen versehen.

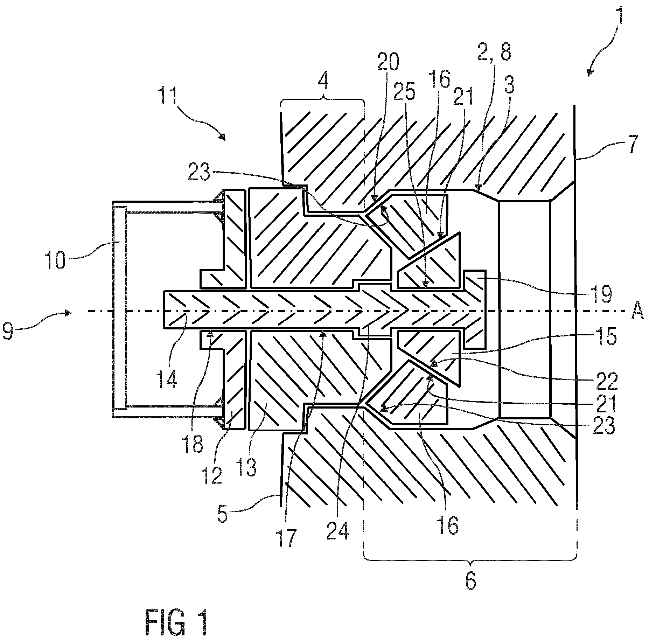

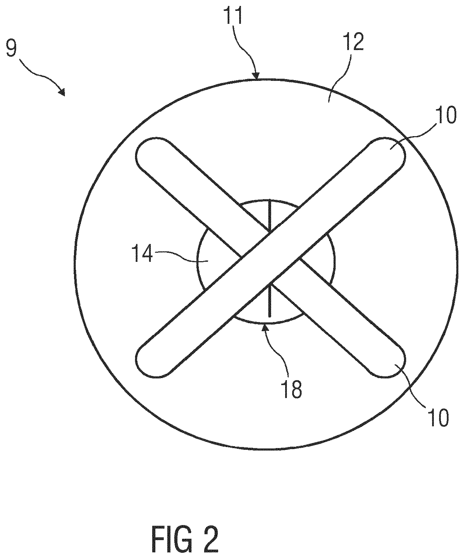

Figur 1 zeigt eine Schnittdarstellung eines Ausschnitts eines Fahrzeugs 1 im Bereich eines Fahrzeugrades 2. Figur 2 zeigt eine Draufsicht auf eine Außenseite 5 des Fahrzeugrades 2. In den beiden Figuren ist dabei insbesondere ein Bereich einer zentralen Öffnung 3 des Fahrzeugrades 2 dargestellt.

Die zentrale Öffnung 3 weist eine Nabendeckelaufnahme 4 auf, welche zur Aufnahme eines Nabendeckels des Fahrzeugrades 2 vorgesehen ist. Diese Nebendeckelaufnahme 4 ist ein Teilbereich dieser zentralen Öffnung 3, insbesondere ein in Axialrichtung dieser zentralen Öffnung 3 äußerer Teilbereich, der somit der Außenseite 5 des Fahrzeugrades 2 zugewandt ist. Die Nabendeckelaufnahme 4 ist dabei eine zur Aufnahme des Nabendeckels ausgebildete Geometrie dieses Teilbereichs der zentralen Öffnung 3. An diesen Teilbereich schließt sich in Axialrichtung ein innerer Bereich 6 der zentralen Öffnung 3 an, der somit einer Innenseite 7 des Fahrzeugrades 2 zugewandt ist. Die Innenseite 7 des Fahrzeugrades 2 weist in Richtung einer Achse des Fahrzeugs 1, an der das Fahrzeugrad 2 befestigt ist.

Um das Fahrzeug 1 insbesondere für einen Transport verzurren zu können, ohne dabei das Fahrzeugrad 2, insbesondere eine Felge 8 des Fahrzeugrades 2, zu beschädigen, ist eine Vorrichtung 9 zum Verzurren des Fahrzeugs 1 auf einer Ladefläche eines Transportmittels, beispielsweise eines Schiffs, vorgesehen. Diese Vorrichtung 9 ist im dargestellten Beispiel bereits am Fahrzeugrad 2 befestigt.

Die Vorrichtung 9 ist eine stabile, insbesondere metallische, Spannmechanik, die in die zentrale Öffnung 3 des Fahrzeugrades 2 eingesetzt und darin am Fahrzeugrad 2 verspannt wird, so dass sie formschlüssig, insbesondere in Axialrichtung der zentralen Öffnung 3 formschlüssig, am Fahrzeugrad 2 befestigt ist.

Die Vorrichtung 9 weist mindestens eine Verzurröse 10 und eine Befestigungsanordnung 11 zum formschlüssigen Befestigen der mindestens einen Verzurröse 10 an der Nabendeckelaufnahme 4 des Fahrzeugrades 2 des Fahrzeugs 1 auf. Im dargestellten Beispiel weist die Vorrichtung 9, wie in Figur 2 gezeigt, zwei Verzurrösen 10 auf, die um die Rotationsachse A der zentralen Öffnung 3 um 90° oder ca. 90° zueinander verdreht angeordnet sind. Die jeweilige Verzurröse 10 ist auf einer Halteplatte 12 der Befestigungsanordnung 11 der Vorrichtung 9 befestigt, insbesondere daran angeschweißt. An der jeweiligen Verzurröse 10 kann ein Spannband angeordnet werden, mittels welchem das Fahrzeug 1 am Transportmittel, insbesondere an dessen Ladefläche, verzurrt werden kann. Figur 2 zeigt aus Gründen der Übersichtlichkeit nur die in der zentralen Öffnung 3 des Fahrzeugrades 2 angeordnete Vorrichtung 9 in der Draufsicht auf die Außenseite 5 des Fahrzeugrades 2.

Die Befestigungsanordnung 11 der Vorrichtung 9 umfasst die bereits erwähnte Halteplatte 12 und zudem einen Träger 13, eine Gewindestange 14, einen Spannkonus 15 und mindestens zwei Verriegelungselemente 16.

Der Träger 13 ist derart ausgebildet, dass er formschlüssig von der Außenseite 5 des Fahrzeugrades 2 aus in die Nabendeckelaufnahme 4 einsetzbar ist. Er weist eine zentrale Durchführungsöffnung 17 zur Aufnahme der Gewindestange 14 auf, welche durch den Träger 13 hindurchgeführt wird.

Die Halteplatte 12 weist eine zentrale Schrauböffnung 18 zum Einschrauben der Gewindestange 14 auf. Hierzu weist diese Schrauböffnung 18 ein zu einem Außengewinde der Gewindestange 14 korrespondierendes Innengewinde auf.

Der Spannkonus 15 ist an der Gewindestange 14 angeordnet, insbesondere in Axialrichtung der zentralen Öffnung 3 nach außen vor einem Kopf 19 der Gewindestange 14, so dass er durch diesen Kopf 19 auf der Gewindestange 14 gehalten ist.

Zum Befestigen der Vorrichtung 9 am Fahrzeugrad 2 werden der Spannkonus 15 mit der Gewindestange 14 und die Verriegelungselemente 16 in der zentralen Öffnung 3 des Fahrzeugrades 2 angeordnet. Dabei werden der Spannkonus 15 und die Verriegelungselemente 16 insbesondere in dem sich an die Nabendeckelaufnahme 4 in Axialrichtung anschließenden Bereich der zentralen Öffnung 3 angeordnet. Die Gewindestange 14 ragt dabei durch die zentrale Öffnung 3 nach außen hindurch, d. h. sie steht über die Außenseite 5 des Fahrzeugrades 2, insbesondere der Felge 8, über. Der Träger 13 wird darauf aufgeschoben und in die Nabendeckelaufnahme 4 eingesetzt. Anschließend wird die Halteplatte 12 auf die Gewindestange 14 aufgeschraubt. Dadurch wird der Träger 13 in der Nabendeckelaufnahme 4 fixiert und schützt die Felge 8 des Fahrzeugrades 2 gegen Beschädigungen, da die sich während des Aufschraubens drehende Halteplatte 12 nicht mit der Felge 8, sondern nur mit dem Träger 13 in Berührung kommt.

Insbesondere wenn dieser Schutz der Felge 8 nicht erforderlich ist, kann in einer anderen Ausführungsform auch vorgesehen sein, dass die Verzurröse 10 oder die jeweilige Verzurröse 10 direkt am Träger 13 befestigt ist, insbesondere angeschweißt ist, d. h. auf dessen von der Achse des Fahrzeugs 1 abgewandter Trägeraußenseite, und der Träger 13 in seiner Durchführungsöffnung 17 das zum Gewinde der Gewindestange 14 korrespondierende Innengewinde aufweist, so dass der Träger 13 auf die Gewindestange 14 aufschraubbar ist. Der Träger 13 übernimmt dann zusätzlich die Aufgaben der Halteplatte 12.

Durch das Aufschrauben der Halteplatte 12 oder in der anderen Ausführungsform durch das Aufschrauben des Trägers 13 wird die Gewindestange 14 nach außen, d. h. in Richtung der Außenseite 5 des Fahrzeugrades 2, gezogen und zieht dabei, insbesondere mittels ihres Kopfes 19, auch den Spannkonus 15 in diese Richtung. Die Verriegelungselemente 16 sind zwischen dem Spannkonus 15 und einer inneren Durchmesserverringerungsausformung 20 der zentralen Öffnung 3 des Fahrzeugrades 2 in dieser zentralen Öffnung 3 angeordnet und werden somit durch den Spannkonus 15 in der zentralen Öffnung 3 radial nach außen und zudem gegen diese Durchmesserverringerungsausformung 20 gepresst, bis sie an dieser Durchmesserverringerungsausformung 20 und an einer Öffnungsinnenwand der zentralen Öffnung 3 anliegen.

Ist dies der Fall, wie in Figur 1 schematisch dargestellt, ist die Vorrichtung 9, insbesondere die Befestigungsanordnung 11, am Fahrzeugrad 2 verspannt, d. h. formschlüssig in der zentralen Öffnung 3 angeordnet und darin befestigt. Der Träger 13 sitzt dabei in der Nabendeckelaufnahme 4 und die Halteplatte 12 mit der mindestens einen Verzurröse 10 liegt, wenn sie vorgesehen ist, am Träger 13 an und ist über die Gewindestange 14 und die Befestigungsanordnung 11 am Fahrzeugrad 2 befestigt. In der oben beschriebenen anderen Ausführungsform ohne die Halteplatte 12, in welcher die mindestens eine oder die jeweilige Verzurröse 10 am Träger 13 angeordnet ist, ist entsprechend der Träger 13 über die Gewindestange 14 und die Befestigungsanordnung 11 am Fahrzeugrad 2 befestigt.

Um die beschriebene Befestigung am Fahrzeugrad 2 zu ermöglichen, weisen die Verriegelungselemente 16 jeweils eine Innenwand 21 auf, die korrespondierend zu einer Kegelstumpfmantelfläche 22 des Spannkonus 15 ausgebildet ist, insbesondere ausgerichtet ist. Ein Durchmesser des Spannkonus 15 vergrößert sich von einer der Außenseite 5 des Fahrzeugrades 2 zugewandten Seite zu einer der Innenseite 7 des Fahrzeugrades 2 zugewandten Seite, so dass die Kegelstumpfmantelfläche 22 des Spannkonus 15 entsprechend ausgerichtet ist, insbesondere in Richtung der Außenseite 5 des Fahrzeugrades 2 geneigt ist.

Des Weiteren weisen die Verriegelungselemente 16 jeweils eine Außenwand 23 auf, die korrespondierend zur Öffnungsinnenwand des sich an die Nabendeckelaufnahme 4 in Axialrichtung anschließenden Bereichs der zentralen Öffnung 3 des Fahrzeugrades 2, insbesondere korrespondierend zur Wandung der Durchmesserverringerungsausformung 20 in diesem Bereich, ausgebildet ist. Dabei ist insbesondere vorgesehen, dass eine Summe eines größten Außendurchmessers des Spannkonus 15 und der, insbesondere radialen, Breiten der beiden Verriegelungselemente 16 größer ist als ein kleinster Innendurchmesser der zentralen Öffnung 3 des Fahrzeugrades 2. Dieser kleinste Innendurchmesser liegt im dargestellten Beispiel an der Durchmesserverringerungsausformung 20 der zentralen Öffnung 3 vor.

Dadurch wird die oben beschriebene Funktionsweise sichergestellt, d. h. das Anpressen der Verriegelungselemente 16 mittels des Spannkonus 15 gegen die Durchmesserverringerungsausformung 20 und gegen die Öffnungsinnenwand der zentralen Öffnung 3, so dass die Befestigungsanordnung 11 und somit die gesamte Vorrichtung 9 in der zentralen Öffnung 3 des Fahrzeugrades 2 verkeilt und dadurch formschlüssig am Fahrzeugrad 2 befestigt ist.

Die Gewindestange 14 weist im dargestellten Beispiel eine Auswerferausformung 24 auf, deren Durchmesser größer ist als ein Durchmesser einer zentralen Aufnahmeöffnung 25 im Spannkonus 15 für die Gewindestange 14. Der Spannkonus 15 ist zwischen dem Kopf 19 und der Auswerferausformung 24 auf der Gewindestange 14 angeordnet. Durch die Auswerferausformung 24 wird es ermöglicht, zum Entfernen der Vorrichtung 9 die Gewindestange 14 zurückzuschieben, d. h. in Richtung der Achse des Fahrzeugs 1 und somit in Richtung des Spannkonus 15, und diesen dadurch von den Verriegelungselementen 16 zu lösen. Dies erleichtert das Lösen des Spannkonus 15 und der durch diesen in der zentralen Öffnung 3 des Fahrzeugrades 2 verklemmten Verriegelungselemente 16.

Um den Spannkonus 15 bei dieser Ausführungsform an der Gewindestange 14 anordnen zu können, ist beispielsweise vorgesehen, dass die Gewindestange 14 und/oder der Spannkonus 15, zumindest vor dem Anordnen des Spannkonus 15 auf der Gewindestange 14, zweiteilig ausgebildet sind/ist. Eine Teilungsebene verläuft dabei bei der Gewindestange 14 beispielsweise quer zur Gewindestange 14 zwischen deren Auswerferausformung 24 und Kopf 19 und/oder beim Spannkonus 15 entlang von dessen Aufnahmeöffnung 25. Die Verbindung der beiden Teile kann nach dem Anordnen des Spannkonus 15 an der Gewindestange 14 dann beispielsweise stoffschlüssig, zum Beispiel durch Verschweißen, und/oder formschlüssig, zum Beispiel durch Verschrauben und/oder Verrasten, und/oder kraftschlüssig erfolgen. Durch den Formschluss und/oder Kraftschluss wird beispielsweise ein zerstörungsfreies Demontieren des Spannkonus 15 von der Gewindestange 14 ermöglicht. Da dies jedoch wahrscheinlich nicht erforderlich ist, bietet sich die stoffschlüssige Lösung als einfache und stabile Lösung besonders an.

## Patentansprüche

1. Vorrichtung (9) zum Verzurren eines Fahrzeugs (1) auf einer Ladefläche,
**gekennzeichnet durch** mindestens eine Verzurröse (10) und eine Befestigungsanordnung (11) zum formschlüssigen Befestigen der mindestens einen Verzurröse (10) an einer Nabendeckelaufnahme (4) eines Fahrzeugrades (2) des Fahrzeugs (1),
wobei die Befestigungsanordnung (11) aufweist:
- einen Träger (13), der derart ausgebildet ist, dass er formschlüssig von einer Außenseite (5) des Fahrzeugrades (2) aus in die Nabendeckelaufnahme (4) einsetzbar ist, **dadurch gekennzeichnet, dass** der eine zentrale Durchführungsöffnung (17) zur Aufnahme einer Gewindestange (14) aufweist,
- die Gewindestange (14),
- einen an der Gewindestange (14) angeordneten Spannkonus (15),
- eine Halteplatte (12), an der die mindestens eine Verzurröse (10) befestigt ist und die eine zentrale Schrauböffnung (18) zum Einschrauben der Gewindestange (14) aufweist, und
- mindestens zwei Verriegelungselemente (16), und die Verriegelungselemente (16) jeweils aufweisen:
- eine Innenwand (21), die korrespondierend zu einer Kegelstumpfmantelfläche (22) des Spannkonus (15) ausgebildet ist, und
- eine Außenwand (23), die korrespondierend zu einer Öffnungsinnenwand eines sich an die Nabendeckelaufnahme (4) in Axialrichtung anschließenden Bereichs einer zentralen Öffnung (3) des Fahrzeugrades (2) ausgebildet ist.

2. Vorrichtung (9) nach Anspruch 1,
**dadurch gekennzeichnet, dass** die mindestens eine Verzurröse (10) mit der Halteplatte (12) verschweißt ist.

3. Vorrichtung (9) nach Anspruch 2,
**dadurch gekennzeichnet, dass** eine Summe eines größten Außendurchmessers des Spannkonus (15) und der Breiten der beiden Verriegelungselemente (16) größer ist als ein kleinster Innendurchmesser der zentralen Öffnung (3) des Fahrzeugrades (2).

4. Vorrichtung (9) nach einem der vorhergehenden Ansprüche,
**dadurch gekennzeichnet, dass** die Gewindestange (14) eine Auswerferausformung (24) aufweist, deren Durchmesser größer ist als ein Durchmesser einer zentralen Aufnahmeöffnung (25) im Spannkonus (15) für die Gewindestange (14).

5. Vorrichtung (9) nach einem der vorhergehenden Ansprüche,
**gekennzeichnet durch** zwei Verzurrösen (10).

6. Vorrichtung (9) nach Anspruch 5,
**dadurch gekennzeichnet, dass** die beiden Verzurrösen (10) um 90° gegeneinander verdreht an der Halteplatte (12) befestigt sind.

7. Vorrichtung (9) nach einem der vorhergehenden Ansprüche, ausgebildet aus Metall.

8. Fahrzeug (1) mit mindestens einer Vorrichtung (9) nach einem der vorhergehenden Ansprüche.

## Claims

1. Device (9) for lashing a vehicle (1) to a loading platform,
**characterized by** at least one lashing eye (10) and a fastening arrangement (11) for form-fittingly fastening the at least one lashing eye (10) to a hub cap receptacle (4) of a vehicle wheel (2) of the vehicle (1),
wherein the fastening arrangement (11) has:
- a support (13) which is designed in such a way that it is form-fittingly insertable into the hub cap receptacle (4) from an outer side (5) of the vehicle wheel (2), **characterized in that**
said support has a central lead-through opening (17) for receiving a threaded rod (14),
- the threaded rod (14),
- a clamping cone (15) arranged on the threaded rod (14),
- a retaining plate (12) to which the at least one lashing eye (10) is fastened and which has a central screw opening (18) for screwing in the threaded rod (14), and
- at least two locking elements (16), and the locking elements (16) each have:
- an inner wall (21) which corresponds to a frustoconical lateral surface (22) of the clamping cone (15), and
- an outer wall (23) which corresponds to an opening inner wall of a region of a central opening (3) in the vehicle wheel (2) which adjoins the hub cap receptacle (4) in the axial direction.

2. Device (9) according to claim 1,
**characterized in that** the at least one lashing eye (10) is welded to the retaining plate (12).

3. Device (9) according to claim 2,
**characterized in that** the sum of the largest outer diameter of the clamping cone (15) and the widths of the two locking elements (16) is greater than the smallest inner diameter of the central opening (3) of the vehicle wheel (2).

4. Device (9) according to any of the preceding claims,
**characterized in that** the threaded rod (14) has an ejector profiling (24), the diameter of which is larger than the diameter of a central receiving opening (25) in the clamping cone (15) for the threaded rod (14).

5. Device (9) according to any of the preceding claims,
**characterized by** two lashing eyes (10).

6. Device (9) according to claim 5,
**characterized in that** the two lashing eyes (10) are fastened to the retaining plate (12) at a rotation of 90° relative to each other.

7. Device (9) according to any of the preceding claims, which is made of metal.

8. Motor vehicle (1) comprising at least one device (9) according to any of the preceding claims.

## Revendications

1. Dispositif (9) permettant d'arrimer un véhicule (1) sur une surface de chargement,
**caractérisé par** au moins un œillet d'arrimage (10) et un agencement de fixation (11) pour la fixation par complémentarité de forme de l'au moins un œillet d'arrimage (10) à un logement d'enjoliveur (4) d'une roue de véhicule (2) du véhicule (1),
dans lequel l'agencement de fixation (11) présente :
- un support (13) conçu de sorte qu'il peut être inséré par complémentarité de forme à partir d'une face extérieure (5) de la roue de véhicule (2) dans le logement d'enjoliveur (4), **caractérisé en ce que**
ledit support présente une ouverture de passage centrale (17) destinée à la réception d'une tige filetée (14),
- la tige filetée (14),
- un cône de serrage (15) disposé sur la tige filetée (14),
- une plaque de fixation (12) à laquelle est fixé l'au moins un œillet d'arrimage (10) et qui présente une ouverture de filetage centrale (18) destinée à l'insertion de la tige filetée (14), et
- au moins deux éléments de verrouillage (16), et les éléments de verrouillage (16) présentent respectivement :
- une paroi intérieure (21) qui est réalisée de manière à correspondre à une surface latérale de tronc de cône (22) du cône de serrage (15), et
- une paroi extérieure (23) qui est réalisée de manière à correspondre à une paroi intérieure d'ouverture d'une zone d'une ouverture centrale (3) de la roue de véhicule (2), laquelle zone se raccorde, dans la direction axiale, au logement d'enjoliveur (4).

2. Dispositif (9) selon la revendication 1,
**caractérisé en ce que** l'au moins un œillet d'arrimage (10) est soudé à la plaque de fixation (12).

3. Dispositif (9) selon la revendication 2,
**caractérisé en ce que** la somme du plus grand diamètre extérieur du cône de serrage (15) et des largeurs des deux éléments de verrouillage (16) est supérieure au plus petit diamètre intérieur de l'ouverture centrale (3) de la roue de véhicule (2).

4. Dispositif (9) selon l'une des revendications précédentes,
**caractérisé en ce que** la tige filetée (14) présente un renflement de projection (24) dont le diamètre est supérieur au diamètre d'une ouverture de réception centrale (25) dans le cône de serrage (15) pour la tige filetée (14).

5. Dispositif (9) selon l'une des revendications précédentes,
**caractérisé par** deux œillets d'arrimage (10).

6. Dispositif (9) selon la revendication 5,
**caractérisé en ce que** les deux œillets d'arrimage (10) sont fixés à la plaque de support (12) en étant tournés de 90° l'un par rapport à l'autre.

7. Dispositif (9) selon l'une des revendications précédentes, réalisé en métal.

8. Véhicule (1) comportant au moins un dispositif (9) selon l'une des revendications précédentes.
